# EUROPEAN PATENT SPECIFICATION

(11) **EP 1 300 671 B1**
(45) Date of publication and mention of the grant of the patent: **22.12.2004**
(21) Application number: 02256959.4
(22) Date of filing: 08.10.2002
(51) Int. Cl.: G01N 21/53

(54) **Improvements in transmission measuring apparatuses**
Verbesserungen an Transmissionsmessgeräten
Amélioration des performances d'appareils de mesure de transmission optique

(30) Priority: 08.10.2001 AU PR813101
(43) Date of publication of application: 09.04.2003
(73) Proprietor: Almos Systems PTY Limited, Osborne Park, W.A. 6017 (AU)
(72) Inventor: Rakoczy, Steve, Western Australia Australia 6017 (AU); McGuinness, Steven T., Western Australia Australia 6017 (AU)
(74) Representative: Vinsome, Rex Martin

(56) References cited:
- EP-A- 0 745 838
- WO-A-99/50092
- US-A- 4 381 153
- US-A- 4 432 649
- US-A- 5 787 385

## Description

### Field of the Invention

This invention relates to transmissometers for measurement of visibility in air, and in particular loss of visibility due to airborne particles.

### Background Art

A transmissometer measures visual range, giving an indication of the distance at which an object can be visually detected. Transmissometers are used in applications such as in airports where the amount of visibility is of critical importance to safety.

A transmissometer typically includes two units, a light transmitter and a light receiver, which are placed a predetermined distance apart. This distance is referred to as the baseline. The light transmitter generates light, typically a pulse of light, which is received at the light receiver. The light receiver measures the intensity of the light received from the light transmitter and this intensity measurement is used to calculate the current visual range.

The light transmitter and light receiver each include a window through which transmitted light passes. The windows prevent ingress of contaminants that would degrade performance of the transmissometer. Contamination of the windows that are exposed to the external environment, such as from jet vapour or dust, effects the accuracy of the light sensing. As the contamination increases, the level of the light detected at the light receiver decreases, giving inaccurate results.

If the amount of contamination can be detected, this factor can be used to improve the measurement accuracy. A known method of measuring the amount of window contamination involves calculating a "contamination factor" by measuring the total internal reflection of the window. This is implemented by transmitting a light into the top of the window and measuring the intensity of light received at the bottom. The received light intensity correlates to the contamination factor, and is factored into measured light detected at the light receiver, to correct for losses caused by contamination.

Another described method of measuring the amount of contamination on the window of a transmissometer is described in US 4432649, and involves cyclicly (from time to time) moving the front window out of the light beam and comparing the readings. As the unit needs to stay sealed, this arrangement requires a second separate window added behind, in series with, the front window. This arrangement does not extend the service life of the transmissometer, but merely provides reliable indication of when the transmissometer windows need cleaning.

Additionally, if the contamination can be reduced, this further improves the measurement accuracy. A known method of reducing window contamination is to provide air flow over the front of the window to reduce the contamination buildup. A blower or fan is used produce the airflow, which adds a continually moving part, giving rise to potential reliability problems.

Whatever method is utilised, it will eventually become necessary to clean or replace the window, as contamination cannot be completely obviated. Cleaning is a manual process, and it would be highly desirable to perform it less frequently and extend the service life of the transmissometer.

Transmissometers used for the determination of visibility require the optical alignment of the light transmitter and the light receiver at each end of the baseline for correct operation, the baseline being the distance between the transmitter and receiver. This adjustment becomes very critical at longer baselines such 75 metres. The typical method of alignment comprises manual adjustment of screws or bolts to move the complete optical section of the light transmitter or receiver. This task can be difficult and is time consuming.

It is an object of this invention to provide a solution to at least one of the aforementioned problems.

Throughout the specification, unless the context requires otherwise, the word "comprise" or variations such as "comprises" or "comprising", will be understood to imply the inclusion of a stated integer or group of integers but not the exclusion of any other integer or group of integers.

### Disclosure of the Invention

In accordance with one aspect of the present invention there is provided a visibility transmissometer having a light transmitter unit and a light receiver unit, the light transmitter unit being arranged to transmit light via a light pathway to the light receiver unit; the light transmitter unit and the light receiver unit each having a light transmissive window located in the light pathway to isolate the atmosphere within said unit from the outside atmosphere; wherein said light transmissive window includes, in at least one of said light transmitter unit and said light receiver unit, at least two portions, one being an operational portion normally located in said light pathway, and at least one normally obscured portion, said light transmissive window having associated therewith a mechanism operable to move said light transmissive window to a new position to utilise a clean portion of said at least two portions.

Preferably said transmissometer has processor means to determine when any one of said at least two portions becomes contaminated, and actuation means to actuate on the level of contamination exceeding a predetermined level. There may be a single processor means in said transmissometer, or a processor means in each of said units.

The actuation means may provide an alarm indication to indicate that said light transmissive window should be cleaned or replaced, or may control the mechanism to move said light transmissive window to a new said portion.

Preferably said transmissometer includes a communications link between said light transmitter unit and said light receiver unit to enable operation of said mechanisms in said units to be synchronised. The processor means will control such synchronisation.

The light transmissive window may comprise a portion, a length, or a roll of transparent film, with said portions being predetermined designated regions thereof. As an alternative, the light transmissive window may comprise a transparent panel with said portions being predetermined designated regions thereof. However, most preferably said light transmissive window is formed from a transparent disk, rotatable about a central axis, said portions being spaced radially from said central axis. Equally preferably, the portions of the transparent disk may be individual glass panels secured within a frame.

Preferably said at least two portions of said light transmissive window include at least one said operational portion, one of which is normally located in said light pathway, and a normally obscured reference portion representative of a clean light transmissive window, said mechanism being arranged to move said light transmissive window between said operational portion and said normally obscured reference portion (to move said normally obscured reference portion into and out of said light pathway); said processor means including a comparator to compare transmitted light between said operational portion and said normally obscured reference portion, and said actuation means actuates on the difference between compared transmitted light between said operational portion and said normally obscured reference portion exceeding a predetermined level.

Preferably said light transmissive window includes a plurality of normally obscured operational portions.

Preferably there are five said at least one operational portions and one said normally obscured reference portion spaced circumferentially around said central axis. With this arrangement, the life of the light transmissive window between cleaning or replacement is five times longer than a single fixed light transmissive window.

Preferably the processor means includes a contamination compensation algorithm to adjust for measured contamination while an operational portion becomes contaminated but remains serviceable.

Preferably said light transmissive window includes at least one peelable transparent layer of film. In this manner, when the window needs to be cleaned, it can be accessed and the contaminated outer layer peeled off and removed from the transmissometer. This feature provides fast turnaround time for in-field servicing.

Preferably said transmissometer incorporates, in proximity to said light transmissive window, an electric field generating means located externally thereof. Preferably said electric field generating means includes a grid of wires located externally of said transmissometer.

In accordance with a second aspect of the invention there is provided a visibility transmissometer having a light transmitter unit and a light receiver unit, the light transmitter unit being arranged to transmit light via a light pathway to the light receiver unit; the light transmitter unit and preferably also the light receiver unit having an optical device moveable in at least one plane by an alignment mechanism to control the alignment of light transmitted via said light pathway and preferably control the alignment of received light; said transmissometer having processor means to control said alignment mechanism(s), said light transmitter unit and said light receiver unit being connected by a communications link, said processor means being responsive to the level of light received by said light receiver unit and controlling said mechanism(s) to optimise target light to said light receiver unit. The optical device may be a laser, a xenon strobe lamp, a detector, and may include lenses and mirrors.

Preferably said alignment mechanism(s) is/are capable of controlling movement of said optical device(s) in two planes.

Preferably one or both said units include in said optical devices, a light reflector located in the light pathway; said light reflector(s) being movable by said alignment mechanism to control the alignment of light transmitted via said light pathway and preferably control the alignment of received light.

Preferably said alignment mechanism(s) is/are capable of controlling movement of said light reflector(s) in two planes.

Preferably said processor means is located in said light transmitter unit, and controls said alignment mechanism in said light transmitter unit in response to a light level signal from said light receiver unit transmitted via said communications link.

Preferably said processor means includes additional processor means located in said light receiver unit, said additional processor means controlling said alignment mechanism in said light receiver unit in response to a light level signal from said light receiver unit.

Preferably said alignment mechanism includes a screw thread drive(s), and alignment is carried out or checked intermittently. Utilisation of screw thread drives (or worm drives) obviates the need for constant control over alignment.

Preferably said transmissometer includes a light transmissive window through which transmitted light passes, located in at least one of said units, and includes in at least one of said light transmitter unit and said light receiver unit, occlusion means to occlude at least a part of said light transmissive window when not in use.

Preferably said occlusion means includes a cover to cover said light transmissive window when not in use, and uncover said light transmissive window when measurements are being made.

Preferably said transmissometer includes a light transmissive window through which transmitted light passes, located in at least one of said units, said light transmissive window including at least one peelable transparent layer of film. In this manner, when the window needs to be cleaned, it can be accessed and the contaminated outer layer peeled off and removed from the transmissometer. This feature provides fast turnaround time for in-field servicing.

Preferably said transmissometer includes a light transmissive window through which transmitted light passes, located in at least one of said units, and incorporates in proximity to said light transmissive, window, an electric field generating means located externally thereof. Preferably said electric field generating means includes a grid of wires located externally of said transmissometer.

### Brief Description of the Drawings

A preferred embodiment of the invention is described in the following description made with reference to the drawings in which:
Figure 1 is a schematic representation of a visibility transmissometer;
Figure 2 is a side view of part of a light transmitter unit (or receiver unit) according to the embodiment;
Figure 3 is a front view of the unit of figure 2;

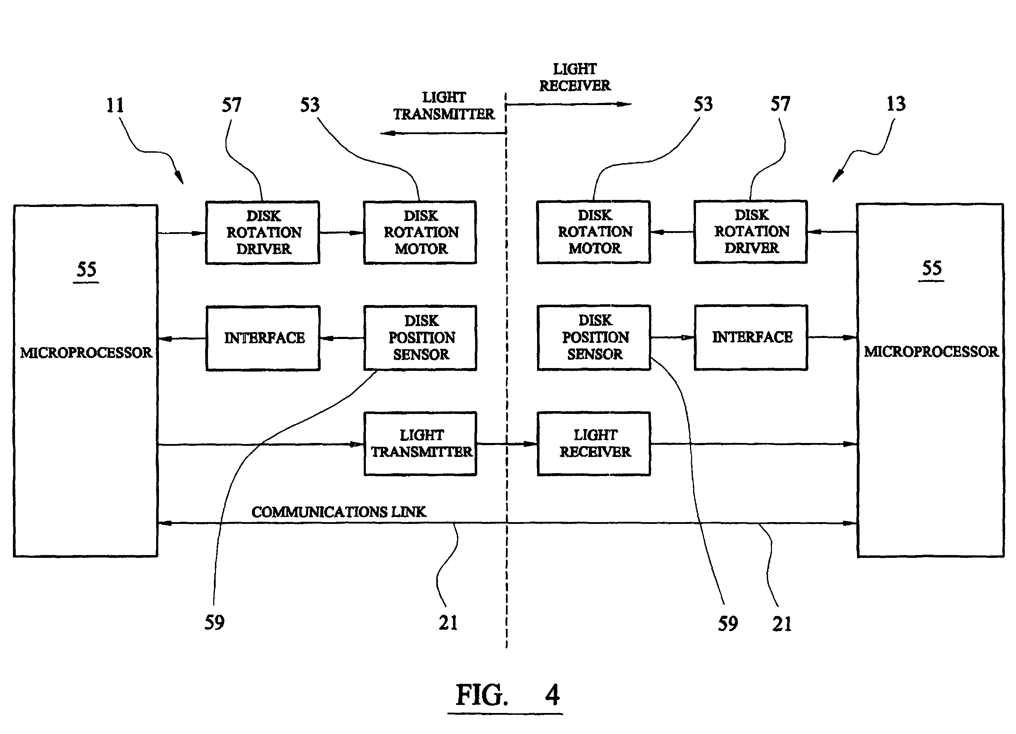

Figure 4 is a block diagram of a controller for controlling movement of the windows in the light transmitter unit and in the light receiver unit;
Figure 5 is a block diagram of a controller for controlling alignment of the light transmitter unit and the light receiver unit;
Figure 6 is a side view of part of the light transmitter unit (or receiver unit) showing detail of the mechanism shown in figure 2; and ;
Figure 7 is a sequence of views showing operation of the mechanism shown in figures 2 and 6.

### Best Mode(s) for Carrying Out the Invention

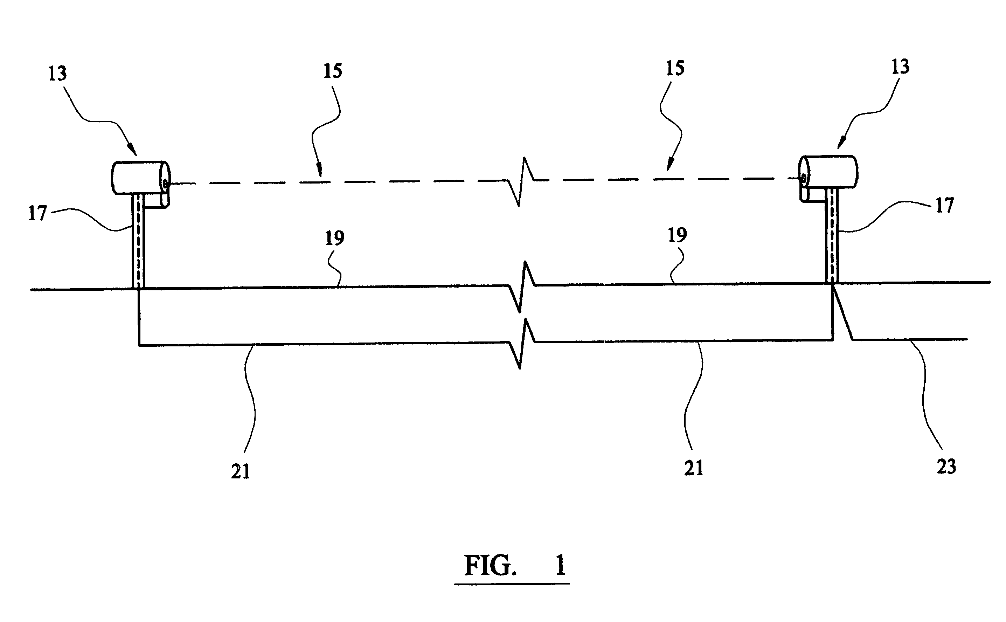

The embodiment is a visibility transmissometer, for use in measuring visibility in air at airports and the like, and is shown generally in figure 1. The visibility transmissometer has a light transmitter unit 11 and a light receiver unit 13. The light transmitter unit 11 is arranged to transmit light via a light pathway (indicated as 15) to the light receiver unit 13. The standard version of the visibility transmissometer uses in the light transmitter unit 11, a high stability Xenon flash lamp to generate the light required for the measurement by the light receiver unit 13. The visibility transmissometer can, in the light transmitter unit 11, use a laser source as an alternative option. The laser source of choice is a frequency doubled Nd:YAG laser operating at 532nm, which generates a green light which is close to the peak sensitivity of the human eye. The laser output is modulated at 10KHz so that the receiver is able to use highly selective filtering and therefore provide greater accuracy in its measurement.

The light transmitter unit 11 and light receiver unit 13 are each mounted on a pole 17 above the ground 19, located 75 metres apart from each other, this distance being known as the baseline. The light transmitter unit 11 and light receiver unit 13 are connected by a subterranean communications link 21 (which also includes power supply necessary for operation). A further subterranean communications link and power feed 23 connects the light receiver unit 13 to monitoring equipment which may be located in the control tower at the airport.

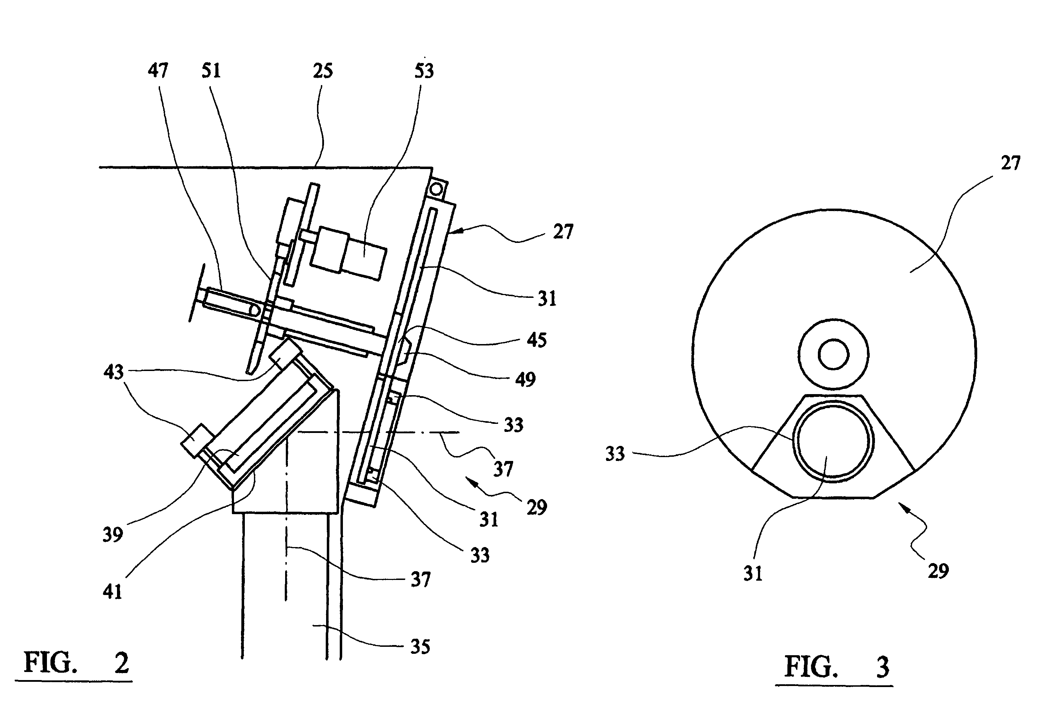

Mechanical detail of the part of the light transmitter unit 11 and light receiver unit 13 is shown in figures 2 and 3. The units have a housing 25 having a front panel 27. Located in the front panel 27, is a light transmissive aperture 29 which has located therein a light transmissive window 31. The units are sealed from the outside atmosphere, to prevent ingress by dust and other contamination which would degrade the performance of the transmissometer. The sealing is assisted by an annular seal 33 located around the periphery of the light transmissive aperture 29, against the light transmissive window 31.

The units 11, 13 include an optics component 35. In the light transmitter unit 11 the optics component 35 generates a light beam 37, in the light receiver unit 13 the optics component 35 receives the light beam 37. The optics component 35 also includes a mirror assembly 39 with a mirror 41 oriented generally to deflect the light beam 37 at an angle of 90°. The fine alignment of the mirror 41 is controlled in two dimensions, by two stepper motors indicated at 43.

The light transmissive window 31 is circular, and commensurate in size with the front panel 27. The light transmissive window 31 has a central mount 45, by which it is secured axially for rotation to a rotatable shaft 47 by a fastener 49. The shaft 47 is driven via a mechanism 51 by a motor 53. The mechanism 51 includes an arrangement to draw the light transmissive window 31 away from the seal 33 prior to commencement of rotation, to prevent contamination of the seal and consequent smearing of the light transmissive window 31 with deposited contaminants.

The light transmissive window 31 has six notional positions, comprising a first operational portion, a normally obscured reference portion representative of a clean light transmissive window, and four further operational portions. Processor means in the form of microprocessors 55 are used to make necessary calculations and control the functions which will now be described.

The amount of contamination is determined by comparing the current level of the light pulse detected at the light receiver unit 13 with the amount of light received when the normally obscured reference portion of the light transmissive window 31, being a reference window of clean glass, is used. This is achieved by temporarily replacing the current operational portion of the light transmissive window 31, both at the light transmitter unit 11 and the light receiver unit 13, with the normally obscured reference portion of the light transmissive window 31. A light flash is then generated from the light transmitter unit 11 and the value of the intensity detected at the light receiver unit 13 is stored and then compared with the value of intensity that was received before the normally obscured reference portions of the light transmissive window 31 were inserted. This difference is used as the contamination factor by the software algorithm calculating true light intensity. The clean normally obscured reference portions of the light transmissive windows 31 at the light transmitter unit 11 and light receiver unit 13 are then replaced with the operational portions of the light transmissive windows 31 that had previously been used before the contamination check.

This compensation check is automatically carried out on a time interval that is configurable in the light transmitter unit 11 or light receiver unit 13, but which is determined by the local environment eg. dust etc. The difference in the light intensity received is used to compensate for the contamination for the period until the next scheduled check.

While the contamination compensation outlined above significantly extends the usable period for an operational portion of the window 31, the contamination level will still reach a stage where the current operational portion of the window 31 is no longer usable without cleaning of the window occurring

When an operational portion of the window 31 reaches the point of being unusable due to contamination, the current operational portion is replaced with a clean operational portion of the window 31, by rotating the window 31 to a new position. As only a small section, being the current operational portion of the window 31 is exposed to the outer environment at any time, the remainder of the window 31 is sealed from the outer environment, and can be rotated into use at a later date.

The motor 53 is controlled by the microprocessor 55. Whenever the window 31 is to be rotated, the motor 53 begins to turn, operating the mechanism which draws the window 31 away from the seal 33. After the window 31 is clear of the seal 33, the motor 53 rotates the window 31 until it reaches the required position, where the mechanism automatically pushes the window 31 back on to the seal. The new area of window 31 to be used as an operational portion now meets the seal 33 located on the front panel 27, sealing the interior of the unit 11, 13.

The window 31 as described gives the transmitter unit 11 or receiver unit 13, five operational portions and the reference portion used for the contamination detection, thus extending the period for maintenance of the window system by five times that of conventional contamination detection systems.

When the window 31 reaches a stage where all operational portions are severely contaminated, a maintenance person simply replaces the contaminated window 31 with a spare clean window 31. Access to the window 31 can be achieved by removing the front panel 27, and unscrewing the fastener 49. The contaminated window 31 can then be taken to a clean workshop environment and be cleaned, ready for use when required.

The rotation of the window 31 is controlled by microprocessor 55 in both the transmitter unit 11 and receiver unit 13 and occurs whenever a contamination check is carried out or when a new section of window 31 is to be used.

Outputs from the microprocessor 55 control a motor drive circuit 57, which operates the motor 53. The microprocessor 55 receives feedback from a location sensor 59 confirming when the disk is located in one of the correct positions. Coordination of the rotation between window in the light transmitter unit 11 and the window 31 in the light receiver unit 13 is via the communications link 21.

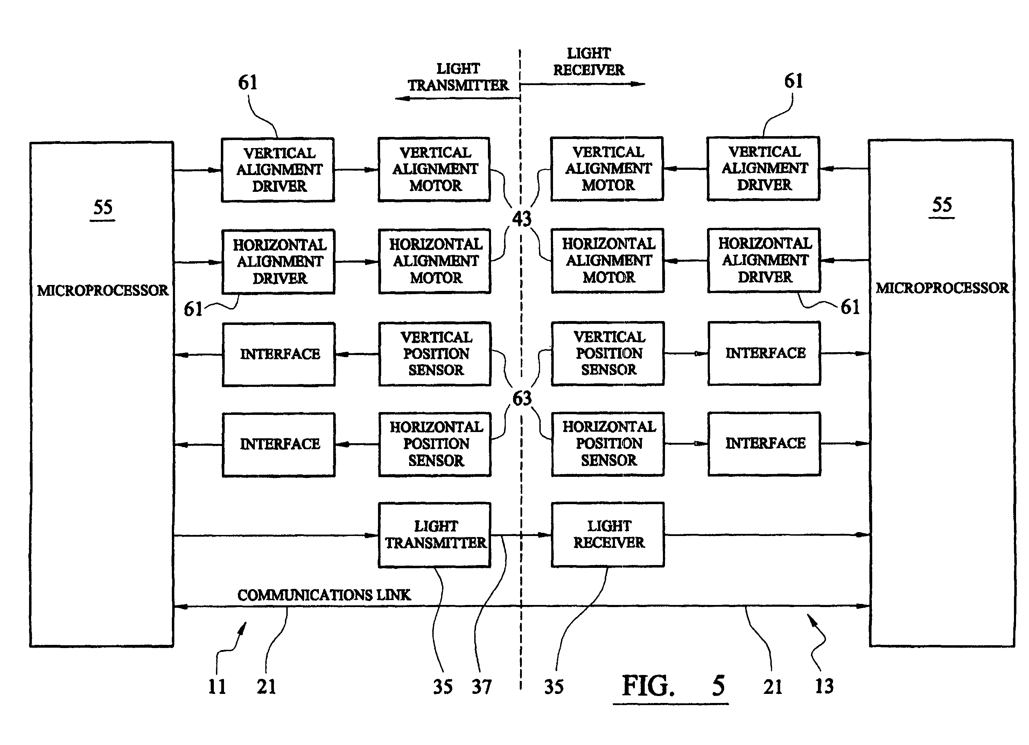

Referring to figure 5, elements relative to the automation of optical alignment of the optics components 35 in the light transmitter unit 11 and in the light receiver unit 13 are shown. Alignment is controlled by microprocessors 55 in light transmitter unit 11 and in the light receiver unit 13, which significantly simplifies the process compared with alignment in conventional transmissometers.

Alignment involves the movement of the mirror 41 of the optics components 35 by two motors 43. The motors 43 drive fine pitched threaded rods, giving vertical and horizontal adjustment to the alignment.

A command is given to the light transmitter unit 11 and the light receiver unit 13 via the communications link 23 and 21 for the alignment to occur. This command can be also be given from a switch, keypad etc located in the transmitter unit 11 and/or receiver unit 13. The alignment is then automatically performed at the transmitter unit 11 and the receiver unit 13, with the mirror being moved in a grid pattern until the optimum light intensity level is obtained at the light receiver unit 13 when a pulse of light is transmitted by the light transmitter unit. The optimum light level is where the received light is received centrally by the light receiver unit, and not at the edge of the beam. While this may or may not equate to maximum light, depending upon optics, this prevents erroneous errors that could occur where the edge of the beam is aligned to the receiver unit, and there is vibration which could cause the beam to move off-target.

The location of optimum light intensisty is then stored in the microprocessor memory and used as the aligned location for the transmitter unit 11 and receiver unit 13. The alignment can be checked or redone at any time by giving an alignment command.

The automated optical alignment of the transmitter or receiver is carried out by moving the mirror 41 in two axes that give horizontal and vertical adjustment. The alignment is carried out using the two stepper motors 43 controlled by the microprocessors 55, via motor drive interfaces 61.

Both horizontal and vertical adjustments have location sensors 63 to provide adjustment position to the microprocessors 55, enabling them to determine a zero position from which the current mirror location is determined by counting pulses used to actuate the stepper motors 43.

Coordination of the rotation between the transmitter and the receiver is via the communications link 21 between the microprocessor 55 in the transmitter unit 11 microprocessor 55 in the receiver unit 13.

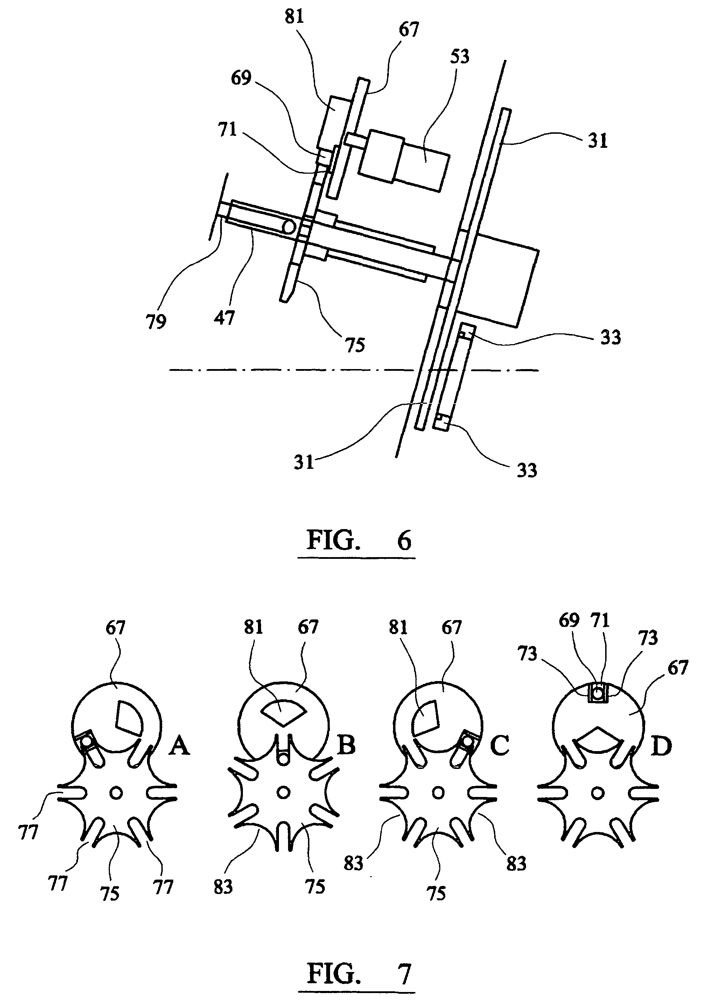

Referring to figures 6 and 7, the mechanism 51 will now be described in greater detail. The motor 53 drives a wheel 67 which has an eccentric pin 69 located on a raised platform 71. The raised platform 71 has two sloping approach surfaces 73. The wheel 67 co-operates with a hexagonal plate 75 having spaced guide slots 77 which receive the pin 69. The plate 75 is fixed to the shaft 47, and rotates with the window 31. The shaft 47 is mounted on a pin 79, and is biased by a spring-loading mechanism (not shown) between the pin 79 and the shaft 47, to urge the window 31 toward the annular seal 33, for sealing during normal operation. To move the window 31 to a different position requires a full rotation of the wheel 67 from the position (the normal operation position) shown in D in figure 7. Rotation can be in either direction. On rotation of the wheel 67, as the pin 69 approaches a slot 77 in the hexagonal plate 75, the proximal surface of the plate 75 adjacent the entry of the slot 77 rides up one of the approach surfaces 73, and onto the raised platform 71 as shown in illustrations A and C of figure 7. This urges the shaft 47 against the spring loading, and draws the window 31 away from the seal 33. As the wheel 67 continues to rotate, the pin 69 co-operating with the slot 77, rotates the hexagonal plate through 60°, to another portion of the window 31. As the pin 69 disengages from the slot 77, and the proximal surface of the plate 75 adjacent the entry of the slot 77 rides down the approach surface 73, the spring-loading again seals the window 31 against the seal 33. A raised segment 81 on the wheel 67 provides registration with curved indents 83 in the hexagonal plate 75, to prevent movement of the window 31 in the normal operation position of the transmissometer.

The transmissometer of the embodiment and invention provides extended operational life, and simple set up and alignment, compared with previous known types. With the alignment as described, the transmitter unit 11 and receiver unit 13 can be aimed approximately when being installed, and fine alignment automatically performed by the on board microprocessors 55. While the mirrors 41 are moved in the embodiment, the entire optical unit could be moved, in an alternative embodiment.

It is als possible to utilise a single transmitter and two or more receivers, with ranges between the receivers set differently, in order to accommodate differing visibility conditions. In such an arrangement, the alignment of the transmitter can be adjusted to direct the beam to the appropriate receiver.

## Claims

1. A visibility transmissometer having a light transmitter unit and a light receiver unit, the light transmitter unit being arranged to transmit light via a light pathway to the light receiver unit; the light transmitter unit and the light receiver unit each having a light transmissive window located in the light pathway to isolate the atmosphere within said unit from the outside atmosphere; **characterised in that** said light transmissive window includes, in at least one of said light transmitter unit and said light receiver unit, at least two portions, one being an operational portion normally located in said light pathway, and at least one normally obscured portion, said light transmissive window having associated therewith a mechanism operable to move said light transmissive window to a new position to utilise a clean portion of said at least two portions.

2. A visibility transmissometer as claimed in claim 1 **characterised in that** said transmissometer has processor means to determine when any one of said at least two portions becomes contaminated, and actuation means to actuate on the level of contamination exceeding a predetermined level, to provide an alarm indication to indicate that said light transmissive window should be cleaned or replaced, and/or control the mechanism to move said light transmissive window to a new said portion.

3. A visibility transmissometer as claimed in claim 1 or 2 **characterised by** including a communications link between said light transmitter unit and said light receiver unit to enable operation of said mechanisms in said units to be synchronised.

4. A visibility transmissometer as claimed in any one of the preceding claims **characterised in that** the light transmissive window comprises a transparent panel with said portions being predetermined designated regions thereof.

5. A visibility transmissometer as claimed in claim 4**characterised in that** said light transmissive window is formed from a transparent disk, rotatable about a central axis, said portions being spaced radially from said central axis.

6. A visibility transmissometer as claimed in any one of claims 2 to 5, **characterised in that** said at least two portions of said light transmissive window include at least one said operational portion, one of which is normally located in said light pathway, and a normally obscured reference portion representative of a clean light transmissive window, said mechanism being arranged to move said light transmissive window between said operational portion and said normally obscured reference portion; said processor means including a comparator to compare transmitted light between said operational portion and said normally obscured reference portion, and said actuation means actuates on the difference between compared transmitted light between said operational portion and said normally obscured reference portion exceeding a predetermined level.

7. A visibility transmissometer as claimed in claim 6 **characterised in that** said light transmissive window includes a plurality of normally obscured operational portions.

8. A visibility transmissometer as claimed in claim 7 **characterised in that** there are five said at least one operational portions and one said normally obscured reference portion spaced circumferentially around said central axis.

9. A visibility transmissometer as claimed in any one of claims 2 to 8 **characterised in that** the processor means includes a contamination compensation algorithm to adjust for measured contamination while an operational portion becomes contaminated but remains serviceable.

10. A visibility transmissometer as claimed in any one of the preceding claims **characterised in that** said light transmissive window includes at least one peelable transparent layer of film.

11. A visibility transmissometer as claimed in any one of the preceding claims **characterised by** including, in proximity to said light transmissive window, an electric field generating means located externally thereof.

12. A visibility transmissometer as claimed in claim 11 **characterised in that** said electric field generating means includes a grid of wires located externally of said transmissometer.

13. A visibility transmissometer as claimed in any one of the preceding claims **characterised in that** said light transmissive window seals against an annular seal surrounding a light transmissive aperture in said visibility transmissometer, and said mechanism is adapted to draw said light transmissive window away from said seal before moving said light transmissive window to different positions.

14. A visibility transmissometer as claimed in any one of claims 3 to 13 **characterised in that** said light transmitter unit has an optical device moveable in at least one plane by an alignment mechanism to control the alignment of light transmitted via said light pathway, wherein said processor means controls said alignment mechanism, said processor means being responsive to the level of light received by said light receiver unit and controlling said alignment mechanism to optimise target light to said light receiver unit.

15. A visibility transmissometer as claimed in claim 14 **characterised in that** said light receiver unit has an optical device moveable in at least one plane by a said alignment mechanism to control the alignment of light received from said light transmitter unit.

16. A visibility transmissometer as claimed in claim 15 **characterised in that** said alignment mechanism is capable of controlling movement of said optical device in two planes.

17. A visibility transmissometer as claimed in claim 15 or 16 **characterised in that** each said optical device includes a light reflector located in the light pathway; said light reflector being movable by said alignment mechanism to control the alignment of light transmitted by said light transmitter unit via said light pathway and preferably control the alignment of received light.

18. A visibility transmissometer as claimed in claim 17 **characterised in that** said alignment mechanism is capable of controlling movement of said light reflector in two planes.

19. A visibility transmissometer as claimed in any one of claims 14 to 18 **characterised in that** said processor means is located in said light transmitter unit, and controls said alignment mechanism in said light transmitter unit in response to a light level signal from said light receiver unit transmitted via said communications link.

20. A visibility transmissometer as claimed in claim 19 **characterised in that** said processor means includes additional processor means located in said light receiver unit, said additional processor means controlling said alignment mechanism in said light receiver unit in response to a light level signal from said light receiver unit.

21. A visibility transmissometer as claimed in any one of claims 15 to 20 **characterised in that** said alignment mechanism includes a screw thread drive(s), and alignment is carried out or checked intermittently, under control of said processor means.

## Patentansprüche

1. Ein Sichtweite-Transmissometer mit einer Lichttransmittereinheit und einer Lichtempfängereinheit, wobei die Lichttransmittereinheit derart angeordnet ist, dass sie Licht über eine Lichtstrecke zu der Lichtempfängereinheit überträgt, wobei die Lichttransmittereinheit und die Lichtempfängereinheit jeweils ein lichtdurchlässiges Fenster aufweisen, welches in der Lichtstrecke angeordnet ist, um die Atmosphäre innerhalb der Einheit von der Atmosphäre außerhalb zu isolieren, **dadurch gekennzeichnet, dass** das lichtdurchlässige Fenster in mindestens einer Einheit aus der aus der Lichttransmittereinheit und der Lichtempfängereinheit bestehenden Gruppe mindestens zwei Bereiche aufweist, wobei ein Bereich einen Betriebsbereich darstellt, welcher normalerweise in der Lichtstrecke platziert ist, und mindestens einen normalerweise verdunkelten Bereich, wobei das lichtdurchlässige Fenster in Verbindung steht mit einem Mechanismus, welcher dahingehend betrieben werden kann, das lichtdurchlässige Fenster in eine neue Position zu bewegen, um einen sauberen Bereich der mindestens zwei Bereiche zu nutzen.

2. Ein Sichtweite-Transmissometer gemäß Anspruch 1, **dadurch gekennzeichnet, dass** das Transmissometer ein Prozessormittel aufweist, um zu entscheiden, wenn irgendeiner der mindestens zwei Bereiche kontaminiert wird, und ein Aktuatormittel, um, wenn der Kontaminationsgrad eine vorgegebene Schwelle überschreitet, eine Alarmanzeige zur Verfügung zu stellen, um anzuzeigen, dass das lichtdurchlässige Fenster gesäubert oder ersetzt werden sollte, und/oder um den Mechanismus zum Bewegen des lichtdurchlässigen Fensters in den neuen Bereich zu regeln.

3. Ein Sichtweite-Transmissometer gemäß einem der Ansprüche 1 oder 2, **dadurch gekennzeichnet, dass** es eine Kommunikationsverbindung zwischen der Lichttransmittereinheit und der Lichtempfängereinheit zur Ermöglichung eines synchronisierten Betriebes der Mechanismen in den Einheiten aufweist.

4. Ein Sichtweite-Transmissometer gemäß einem der vorhergehenden Ansprüche, **dadurch gekennzeichnet, dass** das lichtdurchlässige Fenster eine transparente Scheibe aufweist, wobei die Bereiche vorherbestimmte zugewiesene Regionen dieser Scheibe bilden.

5. Ein Sichtweite-Transmissometer gemäß Anspruch 4, **dadurch gekennzeichnet, dass** das lichtdurchlässige Fenster durch eine transparente Kreisscheibe gebildet wird, welche um eine zentrale Achse drehbar ist, wobei die Bereiche radial von der zentralen Achse beabstandet sind.

6. Ein Sichtweite-Transmissometer gemäß einem der Ansprüche 2 bis 5, **dadurch gekennzeichnet, dass** die mindestens zwei Bereiche des lichtdurchlässigen Fensters mindestens einen Betriebsbereich einschließen, wovon einer normalerweise in der Lichtstrecke angeordnet ist und einen normalerweise verdunkelten Referenzbereich, welcher repräsentativ für ein sauberes lichtdurchlässiges Fenster ist, wobei der Mechanismus derart angeordnet ist, um das lichtdurchlässige Fenster zwischen dem Betriebsbereich und dem normalerweise verdunkelten Referenzbereich zu bewegen, wobei das Prozessormittel eine Vergleichseinheit einschließt, um das übertragene Licht zwischen dem Betriebsbereich und dem normalerweise verdunkelten Referenzbereich zu vergleichen, und wobei das Aktuatormittel darauf reagiert, ob der Unterschied zwischen dem verglichenen transmittierten Licht zwischen dem Betriebsbereich und dem normalerweise verdunkelten Referenzbereich eine vorgegebene Schwelle überschreitet.

7. Ein Sichtweite-Transmissometer gemäß Anspruch 6, **dadurch gekennzeichnet, dass** das lichtdurchlässige Fenster eine Mehrzahl von normalerweise verdunkelten Betriebsbereichen einschließt.

8. Ein Sichtweite-Transmissometer gemäß Anspruch 7, **dadurch gekennzeichnet, dass** fünf von dem mindestens einen Betriebsbereich und ein normalerweise verdunkelter Referenzbereich umfangsseitig beabstandet um die zentrale Achse angeordnet sind.

9. Ein Sichtweite-Transmissometer gemäß einem der Ansprüche 2 bis 8, **dadurch gekennzeichnet, dass** das Prozessormittel einen Kontaminations-Kompensationsalgorithmus einschließt, um eine gemessene Kontamination auszugleichen, wenn ein Betriebsbereich kontaminiert wird, aber betriebsbereit bleibt.

10. Ein Sichtweite-Transmissometer gemäß einem der vorhergehenden Ansprüche, **dadurch gekennzeichnet, dass** das lichtdurchlässige Fenster mindestens eine abziehbare transparente Folienschicht aufweist.

11. Ein Sichtweite-Transmissometer gemäß einem der vorhergehenden Ansprüche, **dadurch gekennzeichnet, dass** es in der Nähe des lichtdurchlässigen Fensters ein Mittel zur Erzeugung eines elektrischen Feldes aufweist, welches außerhalb des lichtdurchlässigen Fensters angeordnet ist.

12. Ein Sichtweite-Transmissometer gemäß Anspruch 11, **dadurch gekennzeichnet, dass** das Mittel zum Erzeugen eines elektrischen Feldes ein Gitter von Drähten aufweist, welches außerhalb des Transmissometers angeordnet ist.

13. Ein Sichtweite-Transmissometer gemäß einem der vorhergehenden Ansprüche, **dadurch gekennzeichnet, dass** das lichtdurchlässige Fenster gegen eine ringförmige Dichtung dichtet, welche eine lichtdurchlässige Öffnung in dem Sichtweite-Transmissometer umgibt, und dass der Mechanismus derart ausgestaltet ist, dass er das lichtdurchlässige Fenster von der Dichtung wegzieht, bevor er das lichtdurchlässige Fenster in verschiedene Positionen bewegt.

14. Ein Sichtweite-Transmissometer gemäß einem der Ansprüche 3 bis 13, **dadurch gekennzeichnet, dass** die Lichttransmittereinheit eine optische Vorrichtung aufweist, welche in mindestens einer Ebene bewegbar ist durch einen Positionierungsmechanismus zur Regelung der Positionierung des über den Lichtweg übertragenen Lichtes, wobei das Prozessormittel den Positionierungsmechanismus regelt, wobei das Prozessormittel auf die Stärke des Lichts reagiert, welches von der Empfängereinheit empfangen wird und den Positionierungsmechanismus regelt, um die Ausrichtung von Licht auf die Empfängereinheit zu optimieren.

15. Ein Sichtweite-Transmissometer gemäß Anspruch 14, **dadurch gekennzeichnet, dass** die Lichtempfängereinheit eine optische Vorrichtung aufweist, welche in mindestens einer Ebene bewegbar ist durch den Positionierungsmechanismus zur Regelung der Positionierung von Licht, welches, kommend von der Lichttransmittereinheit, empfangen wird.

16. Ein Sichtweite-Transmissometer gemäß Anspruch 15, **dadurch gekennzeichnet, dass** der Positionierungsmechanismus derart ausgestaltet ist, dass er eine Bewegung der optischen Vorrichtung in zwei Ebenen regeln kann.

17. Ein Sichtweite-Transmissometer gemäß Anspruch 15 oder 16, **dadurch gekennzeichnet, dass** jede optische Vorrichtung einen Lichtreflektor aufweist, welcher im Lichtweg angeordnet ist, wobei der Lichtreflektor bewegbar ist durch den Positionierungsmechanismus zum Regeln der Positionierung von Licht, welches von der Lichttransmittereinheit über den Lichtweg übertragen wird und vorzugsweise zur Regelung der Positionierung des empfangenen Lichts.

18. Ein Sichtweite-Transmissometer gemäß Anspruch 17, **dadurch gekennzeichnet, dass** der Positionierungsmechanismus derart ausgestaltet ist, dass er eine Bewegung des Lichtreflektors in zwei Ebenen regeln kann.

19. Ein Sichtweite-Transmissometer gemäß einem der Ansprüche 14 bis 18, **dadurch gekennzeichnet, dass** das Prozessormittel in der Lichttransmittereinheit angeordnet ist und den Positionierungsmechanismus in der Lichttransmittereinheit regelt, in Antwort auf ein Lichtpegelsignal von der Lichtempfängereinheit, welches über die Kommunikationsverbindung übertragen wird.

20. Ein Sichtweite-Transmissometer gemäß Anspruch 19, **dadurch gekennzeichnet, dass** das Prozessormittel ein zusätzliches Prozessormittel aufweist, welches in der Lichtemfpängereinheit angeordnet ist, wobei das zusätzliche Prozessormittel den Positionierungsmechanismus in der Lichtempfängereinheit regelt, in Antwort auf ein Lichtpegelsignal von der Lichtempfängereinheit.

21. Ein Sichtweite-Transmissometer gemäß einem der Ansprüche 15 bis 20, **dadurch gekennzeichnet, dass** der Positionierungsmechanismus einen (oder mehrere) Schraubengewindeantrieb(e) aufweist, und dass die Positionierung, geregelt durch das Prozessormittel, durchgeführt oder in Abständen kontrolliert wird.

## Revendications

1. Transmissomètre de visibilité, comportant une unité d'émetteur optique et une unité de récepteur optique, l'unité d'émetteur optique étant agencée de manière à transmettre la lumière par l'intermédiaire d'un trajet optique vers l'unité de récepteur optique ; l'unité d'émetteur optique et l'unité de récepteur optique comportant chacune une fenêtre laissant passer la lumière située dans le trajet optique pour isoler l'atmosphère à l'intérieur de ladite unité de l'atmosphère extérieure ; **caractérisé en ce que** ladite fenêtre laissant passer la lumière inclut, dans au moins l'une de ladite unité d'émetteur optique et de ladite unité de récepteur optique, au moins deux parties, l'une étant une partie fonctionnelle normalement située dans ledit trajet optique, et au moins une partie normalement opacifiée, ladite fenêtre laissant passer la lumière présentant, de manière associée, un mécanisme pouvant être actionné pour déplacer ladite fenêtre laissant passer la lumière dans une nouvelle position afin d'utiliser une partie propre desdites au moins deux parties.

2. Transmissomètre de visibilité selon la revendication 1, **caractérisé en ce que** ledit transmissomètre comporte des moyens de processeur pour déterminer le moment où l'une quelconque desdites au moins deux parties devient contaminée, et des moyens actionneurs fonctionnant si le niveau de contamination dépasse un niveau prédéterminé, délivrant une indication d'alarme pour indiquer que ladite fenêtre laissant passer la lumière doit être nettoyée ou remplacée, et / ou contrôler le mécanisme pour déplacer ladite fenêtre laissant passer la lumière vers ladite nouvelle partie.

3. Transmissomètre de visibilité selon l'une quelconque des revendications 1 ou 2, **caractérisé en ce qu'**il inclut une liaison de communication entre ladite unité d'émetteur optique et ladite unité de récepteur optique pour permettre la synchronisation du fonctionnement desdits mécanismes dans lesdites unités.

4. Transmissomètre de visibilité selon l'une quelconque des revendications précédentes, **caractérisé en ce que** ladite fenêtre laissant passer la lumière comprend un panneau transparent, lesdites parties étant des régions désignées prédéterminées de celui-ci.

5. Transmissomètre de visibilité selon la revendication 4, **caractérisé en ce que** ladite fenêtre laissant passer la lumière est constituée d'un disque transparent, pouvant tourner autour d'un axe central, lesdites parties étant espacées radialement dudit axe central.

6. Transmissomètre de visibilité selon l'une quelconque des revendications 2 à 5, **caractérisé en ce que** lesdites au moins deux parties de ladite fenêtre laissant passer la lumière incluent au moins une dite partie fonctionnelle, dont l'une est normalement située dans ledit trajet optique, et une partie de référence normalement opacifiée, représentant une fenêtre propre laissant passer la lumière, ledit mécanisme étant agencé pour déplacer ladite fenêtre laissant passer la lumière entre ladite partie fonctionnelle et ladite partie de référence normalement opacifiée ; lesdits moyens de processeur incluant un comparateur permettant de comparer la lumière transmise entre ladite partie fonctionnelle et ladite partie de référence normalement opacifiée ; et lesdits moyens actionneurs fonctionnent sur la base de la différence entre la lumière transmise comparée entre ladite partie fonctionnelle et ladite partie de référence normalement opacifiée dépassant un niveau prédéterminé.

7. Transmissomètre de visibilité selon la revendication 6, **caractérisé en ce que** ladite fenêtre laissant passer la lumière inclut une pluralité de parties fonctionnelles normalement opacifiées.

8. Transmissomètre de visibilité selon la revendication 7, **caractérisé en ce qu'**il y a cinq dites, au moins une, parties fonctionnelles et une dite partie de référence normalement opacifiée, espacée circonférentiellement autour dudit axe central.

9. Transmissomètre de visibilité selon l'une quelconque des revendications 2 à 8, **caractérisé en ce que** les moyens de processeur incluent un algorithme compensateur de contamination pour régler la contamination mesurée tandis qu'une partie fonctionnelle devient contaminée, mais est toujours utilisable.

10. Transmissomètre de visibilité selon l'une quelconque des revendications précédentes, **caractérisé en ce que** ladite fenêtre laissant passer la lumière inclut au moins une couche transparente détachable de film.

11. Transmissomètre de visibilité selon l'une quelconque des revendications précédentes, **caractérisé en ce qu'**il inclut, à proximité de ladite fenêtre laissant passer la lumière, des moyens générateurs de champ électrique, situés à l'extérieur de celle-ci.

12. Transmissomètre de visibilité selon la revendication 11, **caractérisé en ce que** lesdits moyens générateurs de champ électrique incluent une grille constituée de fils métalliques, située à l'extérieur dudit transmissomètre.

13. Transmissomètre de visibilité selon l'une quelconque des revendications précédentes, **caractérisé en ce que** ladite fenêtre laissant passer la lumière est scellée contre un joint annulaire entourant un orifice laissant passer la lumière dans ledit transmissomètre de visibilité, et le dit mécanisme est conçu pour retirer ladite fenêtre laissant passer la lumière dudit joint avant de déplacer ladite fenêtre laissant passer la lumière dans différentes positions.

14. Transmissomètre de visibilité selon l'une quelconque des revendications 3 à 13, **caractérisé en ce que** ladite unité d'émetteur optique comporte un dispositif optique pouvant être déplacé dans au moins un plan par un mécanisme d'alignement pour contrôler l'alignement de la lumière transmise sur ledit trajet optique, dans lequel lesdits moyens de processeur contrôlent ledit mécanisme d'alignement, lesdits moyens de processeur étant sensibles au niveau de lumière reçu par ladite unité de récepteur optique, et contrôlant ledit mécanisme d'alignement pour optimiser ladite lumière cible vers ladite unité de récepteur optique.

15. Transmissomètre de visibilité selon la revendication 14, **caractérisé en ce que** ladite unité de récepteur optique comporte un dispositif optique pouvant être déplacé dans au moins un plan par un dit mécanisme d'alignement pour contrôler l'alignement de la lumière reçue depuis ladite unité d'émetteur optique.

16. Transmissomètre de visibilité selon la revendication 15, **caractérisé en ce que** ledit mécanisme d'alignement est en mesure de contrôler le mouvement dudit dispositif optique dans deux plans.

17. Transmissomètre de visibilité selon l'une quelconque des revendications 15 ou 16, **caractérisé en ce que** ledit dispositif optique inclut un réflecteur optique situé dans le trajet optique, ledit réflecteur optique pouvant être déplacé par ledit mécanisme d'alignement pour contrôler l'alignement de la lumière transmise par ladite unité d'émetteur optique sur ledit trajet optique, et de préférence contrôler l'alignement de la lumière reçue.

18. Transmissomètre de visibilité selon la revendication 17, **caractérisé en ce que** ledit mécanisme d'alignement est en mesure de contrôler le déplacement dudit réflecteur optique dans deux plans.

19. Transmissomètre de visibilité selon l'une quelconque des revendications 14 à 18, **caractérisé en ce que** lesdits moyens de processeur sont situés dans ladite unité d'émetteur optique, et contrôlent ledit mécanisme d'alignement dans ladite unité d'émetteur optique en réponse à un signal de niveau d'éclairement provenant de ladite unité de récepteur optique, et transmis par l'intermédiaire de ladite liaison de communication.

20. Transmissomètre de visibilité selon la revendication 19, **caractérisé en ce que** lesdits moyens de processeur incluent desdits moyens de processeur supplémentaires situés dans ladite unité de récepteur optique, lesdits moyens de processeur supplémentaires contrôlant ledit mécanisme d'alignement dans ladite unité de récepteur optique en réponse à un signal de niveau d'éclairement provenant de ladite unité de récepteur optique.

21. Transmissomètre de visibilité selon l'une quelconque des revendications 15 à 20, **caractérisé en ce que** ledit mécanisme d'alignement inclut un ou des entraînements filetés, et l'alignement est effectué ou vérifié par intermittence, en étant contrôlé par lesdits moyens de processeur.
